# EUROPÄISCHE PATENTANMELDUNG

(11) **EP 0 853 884 A1**
(43) Veröffentlichungstag der Anmeldung: **22.07.1998**
(21) Anmeldenummer: 97103920.1
(22) Anmeldetag: 08.03.1997
(51) Int. Cl.: A22C 21/00

(54) **Einrichtung zum Bearbeiten von Geflügelkörpern**

(30) Priorität: 21.01.1997 EP 97100859
(71) Anmelder: NORDISCHER MASCHINENBAU RUD. BAADER GMBH + CO KG, 23560 Lübeck (DE)
(72) Erfinder: Habenicht, Frank, 23611 Sereetz (DE); Wruck, Siegbert, 18435 Stralsund (DE); Ziebell Klaus, 23554Lübeck (DE)
(74) Vertreter: Schaller, Hans-Jörg

(57) **Zusammenfassung**

Es ist eine Einrichtung zum Bearbeiten von Geflügelkörpern, vorrangig von 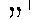 Back halves 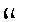 beschrieben, wobei diese mittels eines Hauptförderers (1) an den Beinen (11) im Schäkel hängend längs eines Förderpfades (13) gefördert werden, an dem Bearbeitungsmittel zur Durchführung von Bearbeitungsschritten angeordnet sind, die der Herstellung verbrauchsgerechter Geflügelprodukte dienen. Ein bei dieser Bearbeitung wesentlicher Schritt besteht in der Trennung der Beine (11) von dem Becken (4), wobei die beschriebene Einrichtung darauf ausgelegt ist, den Verlust an Beinfleisch zu minimieren und die Hüftgelenkkugel des Oberschenkels unbeschädigt zu belassen.

## Beschreibung

Die Erfindung geht aus von einer Einrichtung zum Abtrennen der Beine von vorrangig in Form von sogenannten "Back halves" vorliegenden Geflügelkörpern, d. h. eines Körperteils, bei dem das Brustteil (Front half) durch einen zwischen den oberen und unteren Extremitäten unter Belassen des sogenannten "Oysterfleisches" an dem Back half geführten Querschnitt abgetrennt ist und aus einem sattelförmigen Körperabschnitt mit dem Becken, dem unteren Teil der Wirbelsäule, den Hüftgelenken mit den Beinen und dem Schwanzteil besteht, umfassend einen einen Förderpfad bestimmenden Hauptförderer mit Haltemitteln zur Halterung der Geflügelkörper an den Beinen in hängender Anordnung und Förderung derselben mit der Wirbelsäule in Längsrichtung, längs des Förderpfades angeordnete Bearbeitungsmittel zum Lösen und zum Trennen der Beine im Bereich der Hüftgelenke sowie diesen zugeordnete Mittel zum Führen und Mittel zum unterstützenden Fördern der Back halves.

Eine derartige Einrichtung ist beispielsweise aus der US 5 188 559 bekannt. Bei dieser Einrichtung findet ein Bearbeitungswerkzeug Verwendung, welches die Aufgabe hat, von die Beine und das Becken umfassenden Geflügel-Back halves die Beine im Bereich der Hüftgelenke zu trennen. Dazu werden die Back halves durch einen Förderer mit Hängeschäkeln an den Fußgelenken hängend längs einem horizontalen Förderpfad vorbewegt, wobei eine Vortrennung von der Innenseite des Beckens her im Bereich der Hüftgelenke erfolgt. Anschließend wird das Beckenteil durch Schwenkung um die Hüftgelenke um 180° gewendet und mittels einer an der Innenseite des Beckens angreifenden Förderscheibe aus dem Förderpfad herausgeführt, wobei eine Trennung der Beine von dem Becken durch Reißen erfolgt.

Bei derartigen Einrichtungen kommt es darauf an, daß die Fleischausbeute möglichst hoch ist, was für die in Rede stehende Bearbeitung bedeutet, daß dafür Sorge zu tragen ist, daß möglichst wenig Fleisch mit dem abfallenden Becken verloren geht. Eine zwingende Voraussetzung dafür ist, daß das "Oysterfleisch" zuverlässig an den gewonnenen Beinteilen verbleibt. Gleichzeitig ist auch sicherzustellen, daß eine Beschädigung der Gelenkkugel vermieden wird, deren Verletzung u. a. den unerwünschten Effekt mit sich bringen kann, daß Knochenmark aus dem Oberschenkelknochen austritt und sich über das Produkt verteilt. Schließlich sollen die gewonnenen Beinteile ein ansprechendes Äußeres, d. h. im Trennbereich eine möglichst glatte Kontur und Trennfläche haben.

Es ist die Aufgabe der Erfindung, eine vergleichsweise einfache Einrichtung zum Abtrennen der Beine von Geflügel-Back halves anzugeben, die eine optimale Fleischausbeute sicherstellt und ein qualitativ optimiertes Produkt liefert.

Diese Aufgabe wird bei einer Einrichtung der eingangs beschriebenen Art zumindest in wesentlichen Teilen dadurch gelöst, daß die Bearbeitungsmittel zum Lösen der Beine im Bereich der Hüftgelenke je zu beiden Seiten des Förderpfades angeordnete Messerklingen zum Trennen des Bindegewebes im Bereich der Hüftgelenkbeuge und der Hauptbein sehne aufweisen, daß die Mittel zum Führen längs des Förderpfades und im wesentlichen parallel zu diesem verlaufende Führungselemente zur Führung der Back halves unter Angriff im Bereich der inneren Kontur des Beckens und der Beine umfassen, daß die Mittel zum unterstützenden Fördern der Back halves einen Hilfsförderer aufweisen und daß die Bearbeitungsmittel zum Trennen der Beine als an dem Becken angreifende Rückhaltemittel ausgebildet sind.

Durch den angegebenen Aufbau wird eine sich an Sollbruchstellen orientierende Trennung ermöglicht, die so angelegt sind, daß in Verbindung mit der durch Rückhalten des Beckens erzeugten Trennbewegung eine hohe Ausbeute bei vergleichsweise glatter Trennfläche mit großer Zuverlässigkeit erreicht wird.

Zur Erzielung des aufgabengemäßen Ergebnisses ist es zweckmäßig, die die Beine mit dem Becken verbindenden Strukturen weiter zu schwächen. Dies erfolgt vorteilhaft durch Trennen des Bindegewebes im Bereich der Hüftgelenkbeuge und durch Trennen der Haupt-Beinsehne. Bevorzugt kann ersteres erreicht werden durch ein Paar spiegelbildlich zu dem Förderpfad angeordneter, und mit ihren Schneiden von der Innenseite des Beckens her in die Bahn der Hüftgelenke reichender Messerklingen und letzteres durch ein Paar spiegelbildlich zu dem Förderpfad angeordneter und diesen nachgeordneter Messerklingen, die mit ihren Schneiden die Bahn der Hüftgelenke von der Innenseite des Beckens her kreuzen.

Eine entscheidende Voraussetzung dafür ist eine präzise Führung der Back halves. Diese kann durch Führungselemente erreicht werden, die eine sich durch den gesamten Bearbeitungsbereich im wesentlichen parallel erstreckende zentrale Führungsschiene sowie spiegelbildlich zu dem Förderpfad angeordnete Paare von Führungen umfassen.

Um ein Ausweichen der Back halves durch die wirksamen Schnittkräfte zu vermeiden, kann sinnvollerweise der genannte Hilfsförderer vorgesehen sein, der sich durch den Bereich der Bearbeitungsmittel erstreckt und mit Mitteln zur kraftschlüssigen Mitnahme der Back halves unter Angriff an der Außenkontur des Beckens versehen ist. Der Hilfsförderer kann dabei bevorzugt als Endlos-Doppelkettenförderer mit einem Obertrum ausgebildet sein, der der zentralen Führungsschiene unter Belassen eines Spaltes gegenüberliegend geführt ist und zu dem Hauptförderer synchron laufend angetrieben ist.

Das eigentliche Trennen der Beine von dem Becken wird schließlich besonders vorteilhaft durch die Rückhaltemittel vorgenommen, die in einer ersten Ausführung als längs des Förderpfades bewegbares Bremselement mit mindestens einem Mitnehmer ausgebildet sein können, der in die Bahn und gegen die zentrale Führungsschiene zum Führen des Beckens aufragt. Dabei kann eine vorteilhafte Ausgestaltung des Bremselementes darin bestehen, daß es als Schwinge ausgebildet ist, die um eine unterhalb des Förderpfades und quer zu diesem angeordnete Schwenkachse gegen die Kraft einer Feder in Laufrichtung des Hauptförderers schwenkbar ist, wobei die Schwinge zwecks Abstützung des Beckens während des Trennvorganges mit einer zu der Schwenkachse konzentrischen Stützfläche versehen sein kann.

In einer Alternativausführung können die Rückhaltemittel einen als Endlos-Kettenförderer ausgebildeten Hilfsförderer mit Mitnehmern umfassen, deren Teilung kleiner ist als die der Haltemittel des Hauptförderers, wobei der Hilfsförderer einen Antrieb aufweist, der diesem eine Geschwindigkeit verleiht, die zu der des Hauptförderers in einem Verhältnis steht, das demjenigen aus dem Teilungsmaß der Mitnehmer und dem Teilungsmaß der Haltemittel entspricht.

Weitere Vorteile und Ausführungsformen oder -möglichkeiten der Erfindung gehen aus der folgenden Beschreibung der in der schematischen Zeichnung dargestellten Ausführungsbeispiele hervor. Es zeigt in vereinfachter Darstellung
- Fig. 1: eine Seitenansicht der Einrichtung.
- Fig. 2: eine ausschnittweise Seitenansicht der Einrichtung nach Fig. 1 in einer modifizierten Ausgestaltung,
- Fig. 3: einen Querschnitt durch die Einrichtung nach Fig. 1 längs der Schnittlinie III mit einem ausschnittweisen Querschnitt durch das Knochengerüst des Back half, und
- Fig. 4: einen Querschnitt durch die Einrichtung nach Fig. 1 längs der Schnittlinie IV .

Die erfindungsgemäße Einrichtung ist in einem nicht gezeigten Maschinengestell einer Cut up - Linie installiert, in dem ein nur angedeutet dargestellter, in horizontaler Ebene umlaufender Hauptförderer 1 gelagert ist. Dieser ist mit einer Vielzahl von in gleichmäßigem Abstand zueinander angeordneten Schäkeln 2 zur Halterung der zu bearbeitenden Geflügelkörper an ihren Beinen versehen. Der hier gehandhabte Körperabschnitt 3 ist das sogenannte 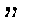 Back half 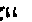 , d. h. ein unteres Teil des Geflügelkörpers, bei dem das Brustteil ( 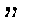 Front half 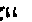 ) durch einen zwischen den oberen und unteren Extremitäten geführten Querschnitt abgetrennt ist. Dieses Teil umfaßt das Becken 4 und den unteren Teil der Wirbelsäule 6 , die Hüftgelenke 7 , bestehend aus den Gelenkpfannen 8 und den Gelenkkugeln 9 , die Oberschenkel 10 , die Beine 11 sowie das Schwanzteil 12 .

Die Förderbewegung des Hauptförderer 1 erfolgt längs eines Förderpfades 13 , an dem verschiedene Bearbeitungsmittel angeordnet sind. Sie umfassen ein Schneidwerkzeug 14 zum Trennen der Bindegewebe im Bereich der Hüftgelenkbeuge, ein Trennwerkzeug 15 zum Trennen der Haupt-Beinsehne. sowie Rückhaltemittel 16 zum Trennen der Beine 11 im Bereich der Hüftgelenke 7 .

Die Werkzeuge 14, 15 weisen jeweils paarweise und symmetrisch zu dem Förderpfad 13 angebrachte Arbeitselemente auf, wobei die Arbeitsbereiche der Werkzeuge von durchgängig angeordneten Mitteln 17 zum Führen der Back halves durchzogen sind.

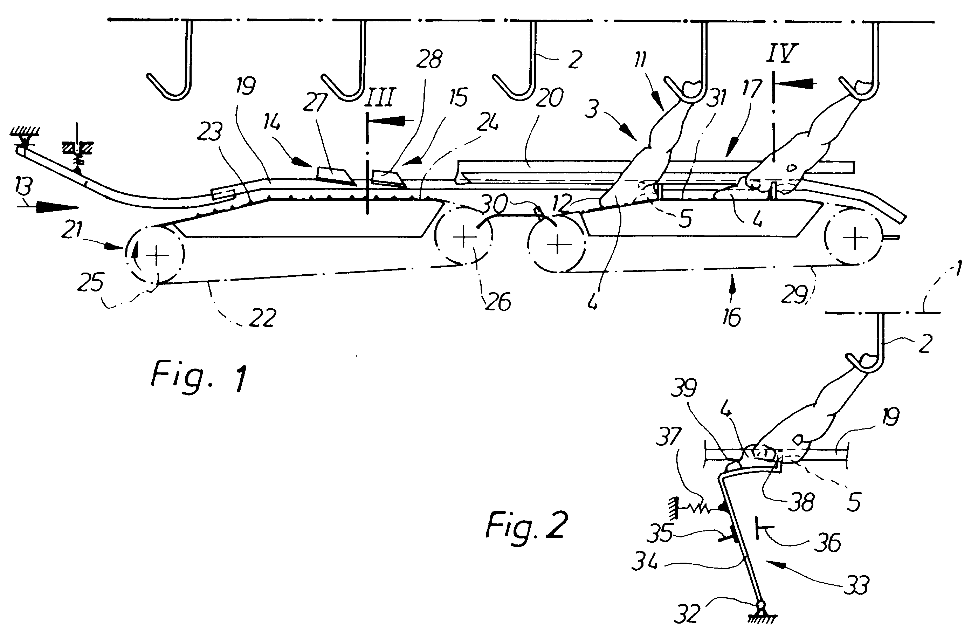

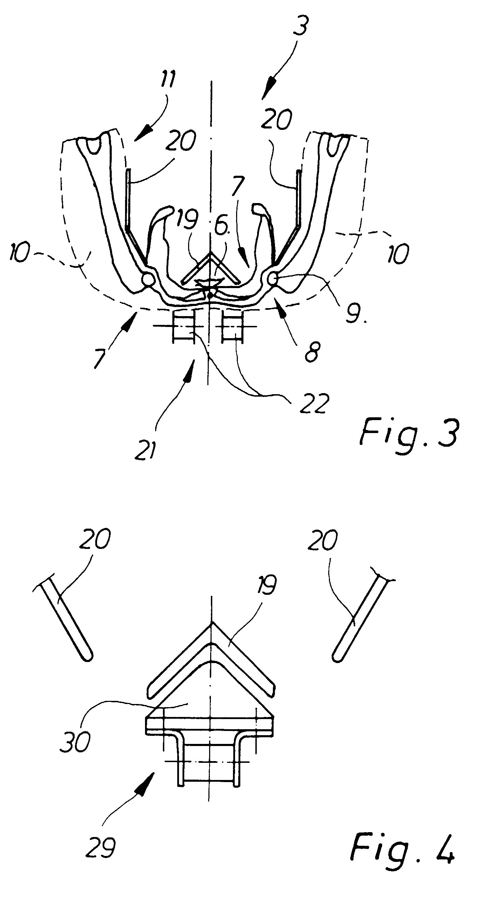

Die Führungsmittel 17 bestehen aus einer längsmittig und parallel zu dem Förderpfad 13 angebrachten Führungsschiene 19 mit dachförmigem Querschnitt, sowie aus die Back halves an der Innenseite der Beine und im Bereich der Hüftgelenke 7 stützenden Führungen 20 (sh. Figuren 1 und 4 ) . Im Arbeitsbereich der Werkzeuge 14, 15 ist ein Hilfsförderer 21 in Form eines mit Stacheln 23 besetzten Endlos-Doppelkettenförderers 22 angeordnet, der in dem Maschinengestell so gelagert ist, daß seine Umlaufebene in der vertikalen Ebene des Förderpfades 13 liegt und sein Obertrum 24 der Führungsschiene 19 unter parallelem Abstand, und sich im Einlaufbereich gegen sie Förderrichtung keilförmig öffnend gegenüberliegt. Die entsprechende Führung erfolgt über Umlenkräder 25 und 26 (Fig. 1).

Die Werkzeuge 14 und 15 weisen längs des Förderpfades 13 und spiegelbildlich zu beiden Seiten der Führungsschiene 19 hintereinander angeordnete Paare von Messerklingen 27 und 28 auf, die mit nach unten weisenden und sich längs des Förderpfades 13 erstreckenden Schneiden versehen sind. Die Messerklingen 27 sind in der Bahn der Hüftgelenkbeuge positioniert, wobei sich deren Schneiden von der Innenseite des Beckens 4 her der Ebene des Obertrums 24 des Hilfsförderers 21 unter spitzem Winkel nähern. Die Messerklingen 28 sind demgegenüber so positioniert, daß deren Schneiden ebenfalls von der Innenseite des Beckens 4 her wirksam sind, aber die Bahn der Hüftgelenke 7 kreuzen. Die Messerklingen 28 können in nicht gezeigter Weise pendelnd gelagert sein, so daß sie eine begrenzte Schwenkbarkeit quer zum Förderpfad 13 haben.

Die Rückhaltemittel 16 zum Trennen der Beine 11 von dem Becken 4 schließen sich dem Hilfsförderer 21 an und umfassen einen weiteren Hilfsförderer 29 , der als Endlos-Kettenförderer ausgebildet und mit Mitnehmern 30 besetzt ist, deren Teilung kleiner ist als die der Schäkel 2 des Hauptförderers 1 . Der Hilfsförderer 29 weist einen Antrieb auf, der diesem eine Geschwindigkeit verleiht, die zu der des Hauptförderers 1 in einem Verhältnis steht, das demjenigen aus dem Teilungsmaß der Schäkel 2 entspricht Die Mitnehmer 30 sind im Bereich des Obertrums 31 des Hilfsförderers 29 so geführt, daß sie in das dachförmige Profil der Führungsschiene 19 eintauchen und dieses annähernd ausfüllen (Fig. 4)

Entsprechend der Ausführung nach Fig. 2 ist der Hilfsförderer 29 durch ein Bremselement 33 ersetzt, das um eine unterhalb des Förderpfades 13 angeordnete Schwenkachse 32 längs des Förderpfades verschwenkbar ist. Das Bremselement 33 ist als Schwinge 34 ausgebildet, die zwischen Anschlägen 35 und 36 gegen die Kraft einer Feder 37 in Laufrichtung des Hauptförderers 1 schwenkbar ist. Die Schwinge 34 weist einen Mitnehmer 38 auf, der in das Profil der Führungsschiene 19 eintaucht, und ist mit einer zu der Schwenkachse 32 konzentrischen Stützfläche 39 für das Backen 4 versehen.

Die Wirkungsweise der erfindungsgemäßen Einrichtung ist nachstehend unter Verfolgung des Durchlaufs eines Back half beschrieben, das wie eingangs dargelegt beschaffen ist und durch entsprechende Vorbearbeitung erzeugt wurde. Das in Schäkeln 2 an den Beinen hängend und mit dem Schwanzteils 12 nachlaufend geförderte Back half wird zunächst ausgerichtet, was durch Unterlaufen des Beckens 4 unter die Führungsschiene 19 und Abstützen der Oberschenkel 10 von der Innenseite her durch nicht gezeigte, den Führungen 20 (Fig. 1, 3 u. 4) ähnliche Führungsmittel geschieht. Das Auffädeln des Back half erfolgt dabei über eine gegen Federkraft nach oben verdrängbare Leitschiene 18 .

So gelangt das Back half in den Bereich des mit dem Hauptförderer synchron laufenden Hilfsförderers 21 , der das Becken 4 unter Stützung von außen gegen die Führungsschiene 19 drängt den Messerklingen 27 und 28 zugeführt, die dafür sorgen, daß das Bindegewebe in den Hüftgelenkbeugen bis an das Hüftgelenk 7 heran und anschließend die Haupt-Beinsehne getrennt werden.

Auf diese Weise in den Hüftgelenken gelöst, aber weiterhin zusammenhängend gelangt das Back half in den Wirkbereich der Rückhaltemittel 16 . Dabei wird das Becken 4 durch den Hilfsförderer 29 von außen stützend erfaßt und unter verminderter Geschwindigkeit gefördert. Dies hat zur Folge, daß der nächste vorauslaufende Mitnehmer 46 das Becken 4 an seiner Abschnittfläche hinterfaßt, so daß eine zunehmende Zug- und Scherkraft auf die verbliebenen Verbindungen zwischen den Beinen 11 und dem Becken 4 ausgeübt wird, bis schließlich die Trennung vollzogen ist. Dank der beschriebenen Vorbereitung bleibt dabei das Oysterfleisch mit dem Beinfleisch verbunden.

Die alternative Möglichkeit des Trennens von Becken 4 und Beinen 11 mittels des Bremselementes 33 entsprechend Fig. 2 geht so vor sich, daß das Becken mit seiner Schnittfläche gegen den Mitnehmer 38 der Schwinge 34 gezogen wird, was bewirkt, daß diese gegen die Kraft der Feder 37 unter beginnender Trennung der Verbindungen zwischen Beinen und Becken verzögert mitgenommen wird, bis spätestens nach Erreichen des Anschlages 36 die vollständige Trennung erfolgt.

Die beschriebene Einrichtung ermöglicht ein Abtrennen der Beine unter hoher Leistung, Zuverlässigkeit und Ausbeute.

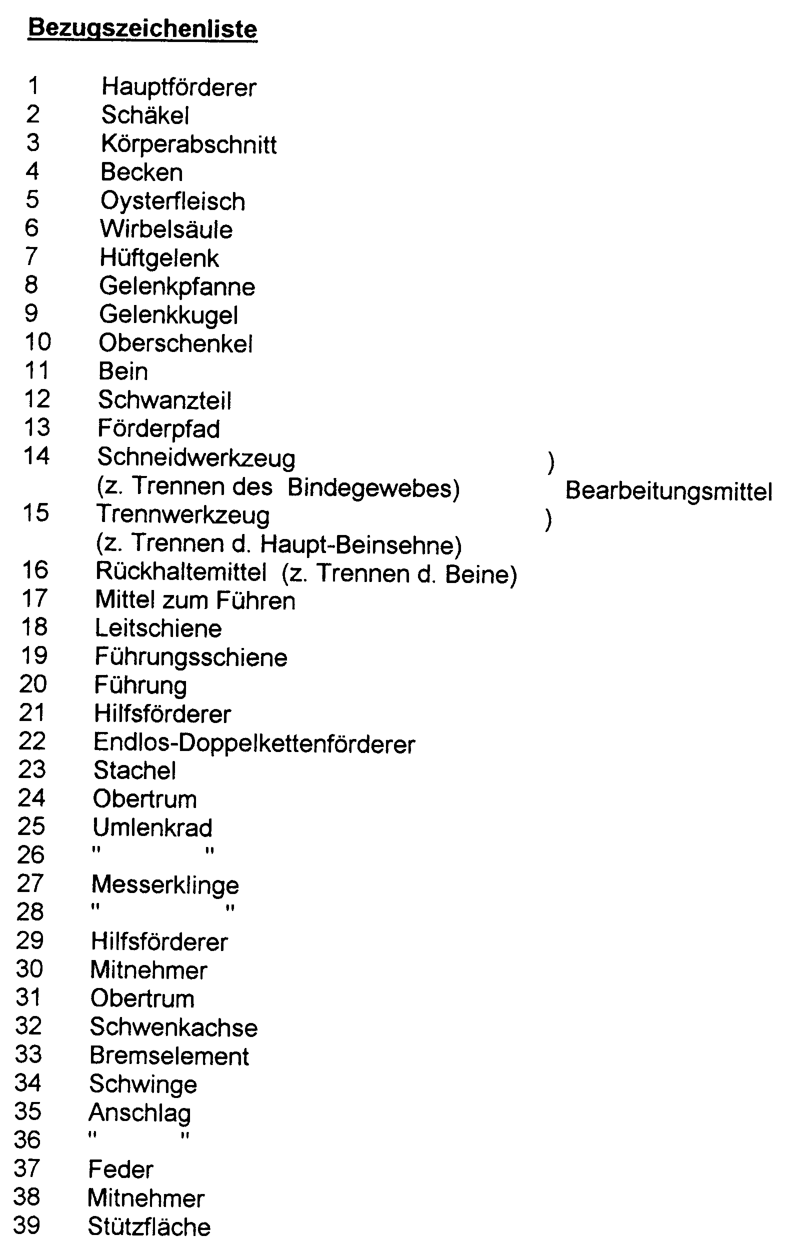

## Patentansprüche

1. Einrichtung zum Abtrennen der Beine von vorrangig in Form von sogenannten "Back halves" vorliegenden Geflügelkörpern, d. h. eines Körperteils, bei dem das Brustteil (Front half) durch einen zwischen den oberen und unteren Extremitäten unter Belassen des sogenannten "Oysterfleisches" (5) an dem Back half geführten Querschnitts abgetrennt ist und aus einem sattelförmigen Körperabschnitt (3) mit dem Becken (4) , dem unteren Teil der Wirbelsäule (6) , den Hüftgelenken (7) mit den Beinen (11) und dem Schwanzteil (12) besteht, umfassend
einen einen Förderpfad (13) bestimmenden Hauptförderer (1) mit Haltemitteln (2) zur Halterung der Geflügelkörper an den Beinen (11) in hängender Anordnung und Förderung derselben mit der Wirbelsäule (6) in Längsrichtung,
längs des Förderpfades angeordnete Bearbeitungsmittel (14, 15, 16) zum Lösen und zum Trennen der Beine im Bereich der Hüftgelenke sowie
diesen zugeordnete Mittel (17) zum Führen und
Mittel (21) zum unterstützenden Fördern der Back halves ,
**dadurch gekennzeichnet,**
daß die Bearbeitungsmittel (14, 15) zum Lösen der Beine (11) im Bereich der Hüftgelenke je zu beiden Seiten des Förderpfades (13) angeordnete Messerklingen (27, 28) zum Trennen des Bindegewebes im Bereich der Hüftgelenkbeuge und der Haupt-Beinsehne aufweisen,
daß die Mittel (17) zum Führen längs des Förderpfades (13) und im wesentlichen parallel zu diesem verlaufende Führungselemente (19, 20) zur Führung der Back halves unter Angriff im Bereich der inneren Kontur des Beckens und der Beine umfassen,
daß die Mittel (21) zum unterstützenden Fördern der Back halves einen Hilfsförderer aufweisen und
daß die Bearbeitungsmittel (16) zum Trennen der Beine als an dem Becken (4) angreifende Rückhaltemittel (16) ausgebildet sind.

2. Einrichtung zum Abtrennen der Beine von vorrangig in Form von sogenannten "Back halves" vorliegenden Geflügelkörpern, d. h. eines Körperteils, bei dem das Brustteil (Front half) durch einen zwischen den oberen und unteren Extremitäten unter Belassen des sogenannten "Oysterfleisches" (5) an dem Back half geführten Querschnitts abgetrennt ist und aus einem sattelförmigen Körperabschnitt (3) mit dem Becken (4) , dem unteren Teil der Wirbelsäule (6) , den Hüftgelenken (7) mit den Beinen (11) und dem Schwanzteil (12) besteht, umfassend
einen einen Förderpfad (13) bestimmenden Hauptförderer (1) mit Haltemitteln (2) zur Halterung der Geflügelkörper an den Beinen (11) in hängender Anordnung und Förderung derselben mit der Wirbelsäule (6) in Längsrichtung,
längs des Förderpfades angeordnete Bearbeitungsmittel (14, 15, 16) zum Lösen und zum Trennen der Beine im Bereich der Hüftgelenke sowie
diesen zugeordnete Mittel (17) zum Führen und
Mittel (21) zum unterstützenden Fördern der Back halves ,
**dadurch gekennzeichnet,**
daß die Bearbeitungsmittel (14, 15) zum Lösen der Beine (11) im Bereich der Hüftgelenke je zu beiden Seiten des Förderpfades (13) angeordnete Messerklingen (27,28) zum Trennen des Bindegewebes im Bereich der Hüftgelenkbeuge und der Haupt-Beinsehne aufweisen.

3. Einrichtung nach Anspruch 1 oder 2 , **dadurch gekennnzeichnet,** daß jede Messerklinge (27) zum Trennen des Bindegewebes im Bereich der Hüftgelenkbeuge mit einer Schneide versehen ist, die von der Innenseite des Beckens (4) her in die Bahn der Hüftgelenke (7) reicht.

4. Einrichtung nach einem der Ansprüche 1 , 2 oder 3 , **dadurch gekennzeichnet,** daß jede Messerklinge (28) zum Trennen der Hauptbeinsehne mit einer Schneide versehen ist, die die Bahn der Hüftgelenke (7) von der Innenseite des Beckens (4) her kreuzen und daß die Messerklingen (28) den Messerklingen (27) nachgeordnet sind.

5. Einrichtung zum Abtrennen der Beine von vorrangig in Form von sogenannten "Back halves" vorliegenden Geflügelkörpern, d. h. eines Körperteils, bei dem das Brustteil (Front half) durch einen zwischen den oberen und unteren Extremitäten unter Belassen des sogenannten "Oysterfleisches" (5) an dem Back half geführten Querschnitts abgetrennt ist und aus einem sattelförmigen Körperabschnitt (3) mit dem Becken (4) , dem unteren Teil der Wirbelsäule (6) , den Hüftgelenken (7) mit den Beinen (11) und dem Schwanzteil (12) besteht, umfassend
einen einen Förderpfad (13) bestimmenden Hauptförderer (1) mit Haltemitteln (2) zur Halterung der Geflügelkörper an den Beinen (11) in hängender Anordnung und Förderung derselben mit der Wirbelsäule (6) in Längsrichtung,
längs des Förderpfades angeordnete Bearbeitungsmittel (14, 15, 16) zum Lösen und zum Trennen der Beine im Bereich der Hüftgelenke sowie
diesen zugeordnete Mittel (17) zum Führen und
Mittel (21) zum unterstützenden Fördern der Back halves ,
**dadurch gekennzeichnet,**
daß die Mittel (17) zum Führen längs des Förderpfades (13) und im wesentlichen parallel zu diesem verlaufende Führungselemente (19, 20) zur Führung der Back halves unter Angriff im Bereich der inneren Kontur des Beckens und der Beine umfassen.

6. Einrichtung nach Anspruch 1 oder 5 , **dadurch gekennzeichnet,** daß die Führungselemente eine sich durch den gesamten Arbeitsbereich im wesentlichen parallel zu dem Förderpfad (13) erstreckende zentrale Führungsschiene (19) , sowie spiegelbildlich zu dem Förderpfad (13) angeordnete Führungen (20) umfassen.

7. Einrichtung zum Abtrennen der Beine von vorrangig in Form von sogenannten "Back halves" vorliegenden Geflügelkörpern, d. h. eines Körperteils, bei dem das Brustteil (Front half) durch einen zwischen den oberen und unteren Extremitäten unter Belassen des sogenannten "Oysterfleisches" (5) an dem Back half geführten Querschnitts abgetrennt ist und aus einem sattelförmigen Körperabschnitt (3) mit dem Becken (4) , dem unteren Teil der Wirbelsäule (6) , den Hüftgelenken (7) mit den Beinen (11) und dem Schwanzteil (12) besteht, umfassend
einen einen Förderpfad (13) bestimmenden Hauptförderer (1) mit Haltemitteln (2) zur Halterung der Geflügelkörper an den Beinen (11) in hängender Anordnung und Förderung derselben mit der Wirbelsäule (6) in Längsrichtung.
längs des Förderpfades angeordnete Bearbeitungsmittel (14, 15, 16) zum Lösen und zum Trennen der Beine im Bereich der Hüftgelenke sowie
diesen zugeordnete Mittel (17) zum Führen und
Mittel (21) zum unterstützenden Fördern der Back halves ,
**dadurch gekennzeichnet,**
daß die Mittel (21) zum unterstützenden Fördern der Back halves einen Hilfsförderer aufweisen.

8. Einrichtung nach Anspruch 1 oder 7 , **dadurch gekennzeichnet,** daß der Hilfsförderer (21) sich durch den Bereich der Bearbeitungsmittel (14, 15) erstreckt und mit Mitteln (23) zur kraftschlüssigen Mitnahme der Back halves unter Angriff an der Außenkontur des Beckens (4) versehen ist.

9. Einrichtung nach einem der Ansprüche 1 , 7 oder 8 , **dadurch gekennzeichnt,** daß der Hilfsförderer (21) als Endlos-Doppelkettenförderer (22) mit einem Obertrum (24) ausgebildet ist, der der zentralen Führungsschiene (19) unter Belassen eines Spaltes gegenüberliegend geführt ist und zu dem Hauptförderer (1) synchron laufend angetrieben ist.

10. Einrichtung zum Abtrennen der Beine von vorrangig in Form von sogenannten "Back halves" vorliegenden Geflügelkörpern, d. h. eines Körperteils, bei dem das Brustteil (Front half) durch einen zwischen den oberen und unteren Extremitäten unter Belassen des sogenannten "Oysterfleisches" (5) an dem Back half geführten Querschnitts abgetrennt ist und aus einem sattelförmigen Körperabschnitt (3) mit dem Becken (4) , dem unteren Teil der Wirbelsäule (6) , den Hüftgelenken (7) mit den Beinen (11) und dem Schwanzteil (12) besteht, umfassend
einen einen Förderpfad (13) bestimmenden Hauptförderer (1) mit Haltemitteln (2) zur Halterung der Geflügelkörper an den Beinen (11) in hängender Anordnung und Förderung derselben mit der Wirbelsäule (6) in Längsrichtung,
längs des Förderpfades angeordnete Bearbeitungsmittel (14, 15, 16) zum Lösen und zum Trennen der Beine im Bereich der Hüftgelenke sowie
diesen zugeordnete Mittel (17) zum Führen und
Mittel (21) zum unterstützenden Fördern der Back halves ,
**dadurch gekennzeichnet,**
daß die Bearbeitungsmittel (16) zum Trennen der Beine als an dem Becken (4) angreifende Rückhaltemittel (16) ausgebildet sind.

11. Einrichtung nach Anspruch 1 oder 10 , **dadurch gekennzeichnet,** daß daß die Rückhaltemittel (16) als längs des Förderpfades (13) bewegbares Bremselement (33) mit mindestens einem Mitnehmer (38) ausgebildet sind, der in die Bahn und gegen die zentrale Führungsschiene (19) zum Führen des Beckens (4) aufragt.

12. Einrichtung nach Anspruch 1 , 10 oder 11 , **dadurch gekennzeichnet,** daß das Bremselement (33) als Schwinge (34) ausgebildet ist, die um eine unterhalb des Förderpfades (13) und quer zu diesem angeordnete Schwenkachse (32) gegen die Kraft einer Feder (37) in Laufrichtung des Hauptförderers (1) schwenkbar ist.

13. Einrichtung nach Anspruch 1 oder einem der Ansprüche 10 bis 12 , **dadurch gekennzeichnet,** daß die Schwinge (34) mit einer zu der Schwenkachse (32) konzentrischen Stützfläche (39) für das Becken (4) versehen ist.

14. Einrichtung nach Anspruch 1 oder 10 , **dadurch gekennzeichnet,** daß die Rückhaltemittel (16) einen als Endlos-Kettenförderer ausgebildeten Hilfsförderer (29) mit Mitnehmern 30) umfassen, deren Teilung kleiner ist als die der Haltemittel (2) des Hauptförderers (1) , wobei der Hilfsförderer einen Antrieb aufweist der diesem eine Geschwindigkeit verleiht, die zu der des Hauptförderers in einem Verhältnis steht, das demjenigen aus dem Teilungsmaß der Mitnehmer und dem Teilungsmaß der Haltemittel entspricht.
